## Europäisches Patentamt
## European Patent Office
## Office européen des brevets

(19)

(11) Numéro de publication: **0 169 116**
**B1**

(12)

# FASCICULE DE BREVET EUROPEEN

(45) Date de publication du fascicule du brevet:
**24.08.88**

(51) Int. Cl.⁴: **G 02 B 26/04**

(21) Numéro de dépôt: **85401211.9**

(22) Date de dépôt: **18.06.85**

(54) Système optique équipé d'un commutateur rapide de voies optiques.

(30) Priorité: **29.06.84 FR 8410353**

(43) Date de publication de la demande:
**22.01.86 Bulletin 86/4**

(45) Mention de la délivrance du brevet:
**24.08.88 Bulletin 88/34**

(84) Etats contractants désignés:
**DE**

(56) Documents cités:
**EP - A - 0 095 088**
**DE - A - 2 240 589**
**FR - A - 477 181**
**FR - A - 1 000 405**
**GB - A - 373 052**
**US - A - 3 464 331**

(73) Titulaire: **THOMSON-CSF, 173, Boulevard Haussmann,
F-75379 Paris Cédex 08 (FR)**

(72) Inventeur: **Dufresne de Virel, François, THOMSON-CSF
SCPI 173, bld Haussmann, F-75379 Paris Cedex 08 (FR)**
Inventeur: **Moreau, Dominique, THOMSON-CSF
SCPI 173, bld Haussmann, F-75379 Paris Cedex 08 (FR)**

(74) Mandataire: **Benoit, Monique et al, THOMSON-CSF
SCPI 19, avenue de Messine, F-75008 Paris (FR)**

# Description

La présente invention concerne un système optique équipé d'un commutateur rapide de voies optiques et s'applique avantageusement à la commutation de champ.

Le système optique est considéré plus particulièrement équipé de deux voies optiques, c'est-à-dire de deux formules optiques ou objectifs à commuter, pour passer du point de vue fonctionnement de la première voie optique à la deuxième, ou inversement de la deuxième à la première.

Pour diverses applications, il peut être utile d'avoir à effectuer une commutation optique permettant de modifier les caractéristiques d'exploitation.

C'est le cas notamment, lorsqu'il s'agit de modifier les caractéristiques du champ observé par un système tel que pour passer d'un petit champ à un grand champ, et vice versa. Un exemple en est le passage d'un champ de ralliement à un champ de guidage pour la conduite d'un missile, ou encore d'un champ de recherche à un champ de désignation dans un système de désignation d'objectif par laser, etc. La commutation de champs revient à constituer autant de voies optiques que l'on veut produire de champs différents, au moins deux voies optiques.

Il est connu d'utiliser une formule optique correspondant à un premier champ d'exploitation et dans laquelle on modifie certains des éléments optiques par retrait ou en y substituant d'autres de façon à produire le deuxième champ d'exploitation. Ces montages sont délicats à réaliser étant donné que le positionnement des éléments représente en général un facteur critique pour la qualité optique à présenter par le système. En outre, le temps requis pour effectuer la commutation et durant lequel le trajet optique se trouve fermé par un dispositif obturateur approprié, n'est pas négligeable. Or, la réduction du temps effectif de commutation pendant lequel le système optique est inopérant, ou inutilisable, est une contrainte essentielle.

Il est connu de nombreuses solutions pour commuter au moins deux voies optiques en utilisant un élément plan qui présente au moins deux régions de caractéristiques optiques différentes et qui sont interposées sur des trajets optiques respectifs, et un moyen de commande pour déplacer l'élément dans son plan et passer d'une position de fonctionnement à l'autre en permutant les régions et consécutivement la voie optique mise en service.

Parmi ces solutions on peut citer la demande de brevet DE-A-2 240 589 qui concerne un appareil de projection avec un écran rotatif partiellement transparent et partiellement opaque pour commuter l'une de deux voies optiques vers un écran de projection. Une autre de ces solutions est décrite dans le brevet FR-A-477 181 qui concerne un appareil de photographie trichrome dans lequel la commutation de voie optique est obtenue par un montage de disques rotatifs partiellement transparent et partiellement réfléchissant pour laisser passer le rayonnement ou le renvoyer vers l'une de trois boîtes noires. On peut citer également la demande de brevet GB-A-373 052 qui utilise un disque muni de caches qui sont de la même taille que le faisceau qu'ils obturent et qui ne peuvent donc assurer une obturation complète que lorsque le disque est arrêté.

Aucune des trois solutions précitées ne révèle l'exigence d'une grande rapidité de commutation et le problème correspondant ne paraît pas posé ni résolu.

Le but de l'invention est de remédier à ces inconvénients et à ces insuffisances en proposant une solution simple qui permet de réduire le plus possible le temps effectif de commutation, ou temps mort, pendant lequel le système optique est inexploitable.

Selon l'invention, il est proposé de réaliser un système optique équipé d'un commutateur rapide de voies optiques, comportant au moins deux voies optiques à commuter et un moyen de commutation de voies assurant le fonctionnement d'une seule voie optique à la fois et permettant de passer d'une première voie optique à une deuxième, et vice versa, en laissant fixe les éléments, optiques constituant les voies respectives, et constitué par un élément plan qui présente au moins deux régions de caractéristiques optiques différentes et qui sont interposées sur les trajets optiques respectifs, et un moyen de commande de déplacement de l'élément dans son plan pour passer d'une position de fonctionnement à une deuxième en permutant les régions et consécutivement, la voie optique sélectionnée, le système étant caractérisé en ce que le moyen de commande est constitué par un moteur pas-à-pas pour produire un incrément de rotation correspondant au passage d'une région à la suivante, en sorte que la commutation au niveau des trajets optiques s'effectue pendant un intervalle de temps où l'élément présente sa vitesse la plus grande de déplacement et donc, pendant la durée la plus courte possible.

Selon une réalisation préférentielle l'élément plan est réalisé sous forme d'un disque partagé diamétralement selon une région transparente et une région opaque.

Le système optique proposé présente plusieurs avantages: le dispositif commutateur ne nécessite pas un positionnement précis en rotation de la pièce optique en mouvement, il assure des temps de commutation très courts ainsi qu'une commutation à volonté, par exemple périodique.

Les particularités de l'invention apparaîtront dans la description qui suit donnée à titre d'exemple non limitatif à l'aide des figures annexées qui représentent:
- la figure 1, un schéma simplifié d'un système optique conforme à l'invention;
- la figure 2, la courbe de variation relative au fonctionnement du moteur d'entraînement pas à pas;
- la figure 3, un mode de réalisation préféré de l'élément commutateur;

– la figure 4, un premier mode de réalisation d'un système optique conforme à l'invention;

– la figure 5, un deuxième mode de réalisation, préférentiel, d'un système optique selon l'invention;

– la figure 6, une variante de réalisation du disque de la figure 3.

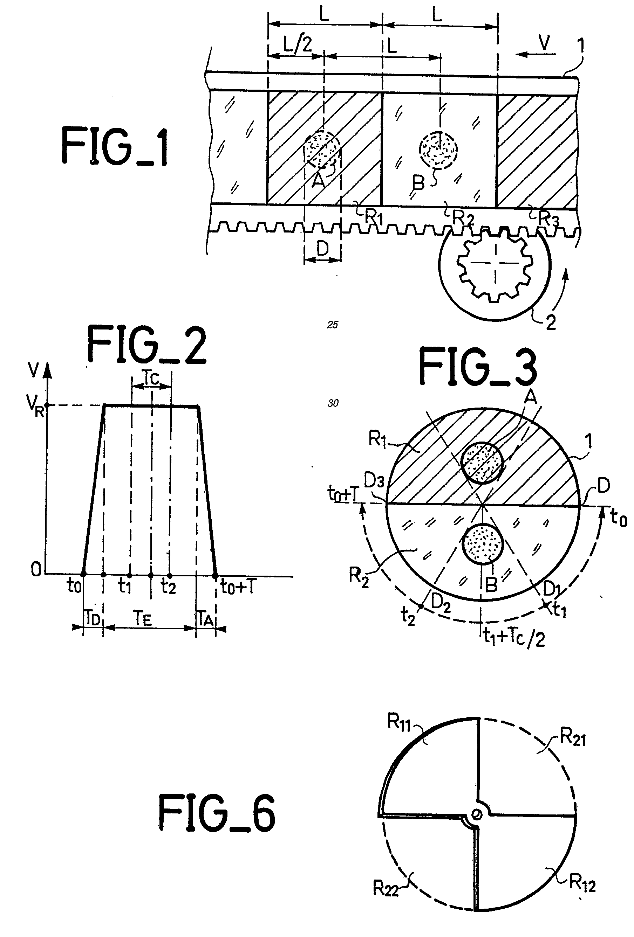

La figure 1 représente partiellement le système optique, et plus particulièrement les moyens de commutation optique rapide constitués de l'élément plan 1 considéré dans le plan de figure et du moyen d'entraînement 2. L'élément plan 1 comporte, dans la version linéaire représentée, des régions successives alternant une zone opaque puis une zone transparente, et ainsi de suite, tel que la région opaque R1 est suivie de la région transparente R2. Les trajets optiques sont représentés par les cercles A et B et représentant la largeur des faisceaux parvenant normalement dans le plan de figure, le centre de ces cercles correspondant aux axes optiques des optiques correspondantes non figurées. On voit ainsi que le faisceau en A est arrêté par le dispositif tandis que la région R2 permet le passage du faisceau B. Le moyen de commande 2 permet de déplacer l'élément plan le long de son plan de manière à substituer à la région R1 une zone transparente R2 et de même de remplacer la zone transparente R2 par la zone opaque suivante R3, suivant le sens de déplacement qui a été indiqué. Dans le cas de figure considéré, si on appelle L la largeur des régions suivant le sens de défilement et également l'espace entre les deux voies optiques, ce paramètre L représente également la translation à donner à l'élément plan pour effectuer la commutation optique désirée. Il va de soi qu'au cours de la commutation suivante d'amplitude également L on retrouvera la disposition initiale représentée sur la figure. On peut également considérer dans une réalisation simple que le nombre de zones est réduit aux trois zones indiquées R1, R2 et R3 et que la translation d'amplitude L s'effectue dans un sens pour passer d'une voie à la suivante et dans le sens inverse pour revenir à l'état initial.

Conformément à l'invention, le moyen de commande 2 est un moteur dit pas à pas, ou à impulsions, Ce type de moteur est très utilisé pour la commande numérique et bien connu en cela. Il tourne d'un pas, c'est-à-dire d'un certain angle bien déterminé, à chaque impulsion de commande qu'il reçoit. Le corps qu'il entraîne produit une course qui est donc proportionnelle au nombre des impulsions de commande qu'il reçoit. Les moteurs pas à pas tournent d'une fraction de tour à chaque impulsion cette rotation correspondant à la valeur angulaire désirée. L'axe de sortie du dispositif moteur pas à pas est attelé directement à la chaîne cinématique à commander; il la manœuvre donc sans servomécanisme, en chaîne ouverte. La seule précaution à prendre est la mise en accord préalable c'est-à-dire le calage initial de l'élément à entraîner; c'est à partir de cette position que la commande entrera en action.

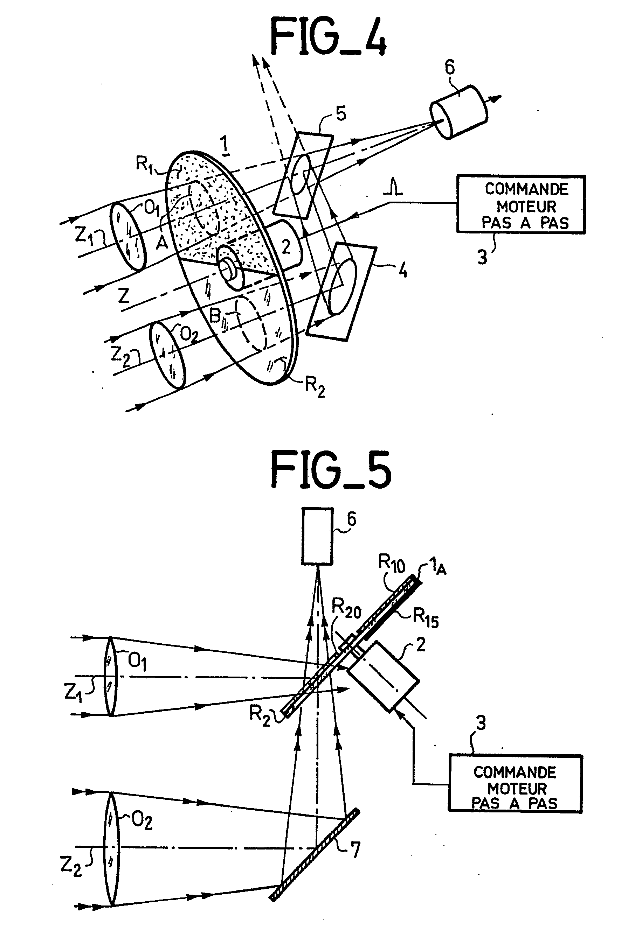

La figure 2 représente schématiquement la courbe de variation de la vitesse de l'élément 1 entraîné par le moteur pas à pas. A l'instant $t_0$ de réception de l'impulsion de commande il y a d'abord une phase de démarrage de durée $T_D$ au cours de laquelle la vitesse va s'accroître jusqu'à obtenir sa vitesse de pallier VR cette vitesse maximale est ensuite préservée pendant une certaine durée $T_E$ puis vient ensuite la phase d'arrêt au cours de laquelle la vitesse VR décroît à nouveau pour s'annuler à l'instant $t_0+T$, la durée T étant celle pendant laquelle le moteur pas à pas a été opérationnel. On a représenté sur cette courbe une partie $T_C$ qui est de préférence sensiblement centré durant la phase $T_E$ et qui correspond à la durée mise pour parcourir le diamètre D du faisceau A ou du faisceau B, cette durée correspondant à la durée de commutation effective du faisceau correspondant. On se rend bien compte que cette durée $T_C$ se produit durant la phase $T_E$ où l'élément a sa vitesse maximale et correspond donc à une durée d'obturation minimale pour le système optique.

La figure 3 représente une réalisation préférée de l'élément plan, cette réalisation préférée étant un disque qui porte deux zones distinctes, une moitié R1 du disque étant opaque et l'autre moitié R2 transparente. On a figuré également les trajets optiques par les cercles A et B ainsi que les instants successifs t0, t1, etc. jusqu'à t0+T correspondant à une rotation d'un demi-tour du disque. Cette rotation d'un demi-tour du disque permet de passer d'une région à la suivante et de produire la commutation. A l'instant t1 le point D du diamètre de séparation des régions R1 et R2 parvient en D1 et marque l'instant initial d'obturation de la zone B, à l'instant t2 correspondant à t1+$T_C$ le point D est en D2 et la zone B est entièrement occultée par la région opaque R1 du disque lequel achève sa course lorsque le point D2 est parvenu en D3 à l'instant t0+T.

La figure 4 montre un premier mode de réalisation du système sur lequel on a fait figurer deux objectifs optiques O1 et O2 et le dispositif commutateur optique rapide sous forme d'un disque 1 entraîné par une commande pas à pas 2. A l'arrière de ce dispositif de commutation on trouve un miroir réfléchissant 4, un miroir semi-transparent 5 et un dispositif récepteur 6, par exemple un photodétecteur. Le bloc 3 représente le générateur de signaux de commande du moteur pas à pas 2. Les axes optiques Z1 et Z2 sont perpendiculaires au plan du disque. Le fonctionnement apparaît sur la figure. Dans la position représentée la région opaque R1 arrête le rayonnement provenant de l'objectif O1 et la région transparente R2 laisse passer le rayonnement provenant de l'objectif optique O2, ce rayonnement est alors renvoyé par le miroir 4 et ensuite partiellement par le miroir 5 vers le détecteur 6 centré sur l'axe Z1. Après envoi d'une impulsion de commande sur le moteur 2, le disque tourne d'un demi tour et dans cette deuxième position le rayonnement de l'optique O2 est arrêté par la région R1 et celui de l'optique O1 est transmis à travers la région R2 et partiellement à travers le miroir 5 sur l'élément 6. On notera que dans une version à deux détecteurs disposés respectivement sur les axes Z1 et Z2, les mirois 4 et 5 sont éliminés du montage.

La figure 5 représente un deuxième mode de réalisation du système selon la figure 4 c'est-à-dire à deux objectifs optiques et à un détecteur. Dans cette version préférentielle, le disque 1A est incliné à 45° sur un axe optique, par exemple sur l'axe Z1 de l'optique O1, et le disque est constitué de la région transparente R2, la région opaque R1 étant remplacée par une zone réfléchissante R10. Sur l'axe Z2 située au-dessous de l'axe Z1 se trouve disposé un miroir réfléchissant 7 également incliné de manière à renvoyer l'axe Z2 vers le détecteur 6. Le miroir 7 est donc disposé parallèlement au disque 1A. Lorsque la région transparente R2 est présente comme figurée sur l'axe Z1, le rayonnement reçu à travers l'objectif O1 traverse le disque et se trouve perdu; par contre, le rayonnement provenant de l'objectif O2 est réfléchi par le miroir 7 et renvoyé vers le détecteur 6 après avoir traversé la zone transparente R2 du disque. Lorsque le moteur pas à pas 2 a fait tourner le disque d'un demi-tour, la région R10 remplace la région R2, et joue le rôle de miroir pour le rayonnement issu de l'objectif O1, renvoyant ce rayonnement en direction du détecteur 6. Dans cette position, le rayonnement issu de l'objectif O2 et renvoyé par le miroir 7, se trouve arrêté par le disque 1A et est également perdu. Le disque 1A peut être conçu en matériau transparent; verre ou plastique, dont une moitié aura subi un dépôt sur une face pour constituer le miroir R10. On pourra d'ailleurs, sur la face opposée à R10, effectuer un dépôt opaque absorbant R15 pour absorber le rayonnement provenant de l'optique O2 et éviter des réflexions parasites. En outre, un dépôt anti-réfléchissant 20 est effectué sur la face de la zone transparente R2 orientée vers l'objectif O1, de façon à éviter dans la position représentée sur la figure que le rayonnement provenant de l'optique O1 sont partiellement réfléchi vers le détecteur 6.

Les réalisations représentées sur les figures 4 et 5 ne sont pas limitatives comme on l'a déjà cité précédemment et on peut également considérer que le système optique n'est pas récepteur mais qu'il est émetteur, l'élément 6 étant une source lumineuse.

La figure 6 représente, à titre indicatif, un autre exemple de réalisation du disque avec deux secteurs opaques R11, R12 et deux secteurs transparents R21, R22, alternés, chaque secteur couvrant 90°. Le disque peut être réalisé à l'aide d'une plaque ou d'une feuille métallique découpée pour être circulaire et ménager les ouvertures R21, R22.

Le nombre de zones peut être plus élevé que la version à 4 zones représentée; en doublant par exemple le nombre d'ouvertures pratiquées dans la feuille on obtient quatre secteurs opaques et quatre transparents, et ainsi de suite. Le matériau de la feuille peut être autre que métallique, plastique par exemple, la fonction étant d'avoir une transparence nulle pour arrêter la transmission lumineuse dans les zones correspondantes. La réalisation à deux zones selon la figure 3 par découpe d'une feuille est plus délicate à cause du balourd entraîné par cette configuration à moins de le compenser par un contrepoids dans la zone R2 en dehors de la zone utile de passage du faisceau, ce qui complique l'exécution.

De manière générale, l'élément 1 du commutateur rapide conforme à l'invention présente, en version circulaire, 2n régions ou zones, groupant n régions opaques ou réfléchissantes et n régions transparentes alternées successivement, avec n entier au moins égal à 1.

Le dispositif de commutation optique rapide proposé présente l'avantage de ne pas demander de positionnement précis en rotation du disque optique en mouvement (le moteur pas à pas assure le fonctionnement à quelques degrés près), d'obtenir des temps de commutation très courts, ainsi qu'une commutation à gré, ou éventuellement périodique. On notera également que le système optique reste fixe. L'axe de sortie du moteur pas à pas peut présenter des défauts en rotation (faux-rond dus à excentrement, inclinaison; ...) qui, en se répercutant sur l'élément 1 entraîné, ne permettent pas toujours le fonctionnement optique (déviation angulaire dans l'exemple de la figure 5) avec des tolérances acceptables. Pour remédier à ces défauts, on couple l'axe moteur avec un dispositif mécanique de guidage. Ce dispositif peut consister selon des techniques connues en un boîtier réducteur de vitesse qui assure, de plus, une démultiplication angulaire déterminée.

## Revendications

1. Système optique équipé d'un commutateur rapide de voies optiques, comportant au moins deux voies optiques à commuter et un moyen de commutation de voies assurant le fonctionnement d'une seule voie optique à la fois et permettant de passer de la première voie optique à la deuxième, et vice versa, en laissant fixe les éléments optiques constituant les voies respectives, et constitué par un élément plan (1) qui présente au moins deux régions de caractéristiques optiques différentes (R1, R2) et qui sont interposées sur les trajets optiques respectifs, et un moyen de commande (2, 3) de déplacement de l'élément dans son plan pour passer d'une position de fonctionnement à une deuxième en permutant les régions et consécutivement, la voie optique sélectionnée, caractérisé en ce que le moyen de commande est constitué par un moteur pas-à-pas (2) pour produire un incrément de rotation correspondant au passage d'une région à la suivante, en sorte que la commutation au niveau des trajets optiques s'effectue pendant un intervalle de temps où l'élément présente sa vitesse la plus grande de déplacement et donc, pendant une durée la plus courte possible.

2. Système selon la revendication 1, caractérisé en ce que l'élément plan (1) comporte 2n régions, (n entier supérieur ou égal à 1), alternant successivement une région transparente (R2) pour laisser passer le rayonnement lumineux et

**0 169 116**

une région non transparente (R1) pour arrêter ou renvoyer ce rayonnement.

3. Système selon la revendication 1 ou 2, caractérisé en ce que l'élément plan (1) est réalisé sous forme d'un disque.

4. Système selon la revendication 3, caractérisé en ce que le disque ne comporte que deux régions (R1, R2) qui sont séparées par un diamètre.

5. Système selon la revendication 3, caractérisé en ce qu'il est interposé sur le trajet optique provenant de deux objectifs (O1, O2) à axes parallèles et que l'élément plan (1) est un disque perpendiculaire à ces axes avec une région opaque et une région transparente, à l'arrière du disque se trouve un miroir réfléchissant (4) incliné sur l'axe d'un premier objectif (O2) et un miroir semi-transparent (5) parallèle au précédent et incliné sur l'axe du deuxième objectif (O1) pour renvoyer l'axe du premier objectif selon la direction de l'axe optique du deuxième objectif, direction suivant laquelle se trouve placé un dispositif photorécepteur ou photoémetteur (6) à l'arrière du miroir semi-transparent.

6. Système selon la revendication 3, caractérisé en ce que le disque est incliné sur l'axe optique d'une première voie issue d'un premier objectif (O1) et qu'un deuxième objectif (O2) d'axe parallèle constitue la deuxième voie, l'axe de la première voie étant réfléchi par le disque (1A) vers un dispositif photodétecteur ou photoémetteur (6), l'axe de la deuxième voie étant réfléchi vers ledit dispositif détecteur ou émetteur par un miroir réfléchissant (7) parallèle au disque, et incliné sur l'axe du deuxième objectif, chacune desdites régions non transparents étant rendues réfléchissantes pour réfléchir le rayonnement de ladite première voie.

7. Système selon la revendication 6, caractérisé en ce que le disque (1A) est réalisé en matériau transparent et chaque région réfléchissante est obtenue par un dépôt (R10) sur le secteur correspondant.

8. Système selon la revendication 7, caractérisé en ce que chaque région non transparente comporte de plus un dépôt absorbant (R15) pour le rayonnement de la deuxième voie, et que chaque région transparente (R2) est traitée anti-réfléchissante (R20) pour le rayonnement de la première voie.

9. Système selon l'une quelconque des revendications 3, 4, 5, 6, caractérisé en ce que le disque est constitué par une plaque circulaire découpée (R11, R12).

**Patentansprüche**

1. Optisches System mit einem schnellen Optik-Kanalschalter, mit mindestens zwei umzuschaltenden optischen Kanälen und einem Kanalschaltmittel, das den Betrieb von jeweils nur einem optischen Kanal bewirkt und einen Übergang vom ersten Kanal zum zweiten und umgekehrt erlaubt, indem die optischen Elemente, die die jeweiligen Kanäle bilden, stationär bleiben und das aus einem ebenen Element (1), das mindestens zwei Bereiche mit unterschiedlichen optischen Kennwerten (R1, R2) besitzt, die in die jeweilige optische Strecke eingefügt sind, und aus einem Steuermittel (2, 3) für die Verschiebung des Elements in seiner Ebene besteht, damit dieses von einer Betriebsstellung in eine zweite dadurch gelangen kann, dass die Bereiche und demgemäss der ausgewählte optische Kanal vertauscht werden, dadurch gekennzeichnet, dass das Steuermittel von einem Schrittschaltmotor (2) gebildet wird, der ein Rotationsinkrement entsprechend dem Übergang von einer Zone in die andere erzeugt, so dass die Umschaltung sich in Höhe der optischen Strecken während eines Zeitintervalls ergibt, in dem das Element seine grösste Verschiebegeschwindigkeit besitzt, und somit die Umschaltung in der kürzestmöglichen Zeit erfolgt.

2. System nach Anspruch 1, dadurch gekennzeichnet, dass das ebene Element (1) 2n Zonen aufweist (n ist eine ganze Zahl $\geqslant 1$), wobei abwechselnd eine transparente Zone (R2) für den Durchlass der Lichtstrahlung und eine nicht transparente Zone (R1) für die Blockierung oder Reflektierung dieser Strahlung aufeinanderfolgen.

3. System nach Anspruch 1 oder 2, dadurch gekennzeichnet, dass das ebene Element (1) Scheibenform besitzt.

4. System nach Anspruch 3, dadurch gekennzeichnet, dass die Scheibe nur zwei Zonen (R1, R2) besitzt, die entlang eines Durchmessers voneinander getrennt sind.

5. System nach Anspruch 3, dadurch gekennzeichnet, dass es in der von zwei Objektiven (O1, O2) mit parallelen Achsen kommenden optischen Strecke liegt und dass das ebene Element (1) eine Scheibe ist, die senkrecht zu diesen Achsen liegt und eine lichtundurchlässige und eine lichtdurchlässige Zone besitzt, dass hinter der Scheibe ein reflektierender Spiegel (4), der zur Achse eines ersten der Objektive (O2) geneigt ist, und ein halbtransparenter Spiegel (5) liegen, der parallel zum ersten Spiegel angeordnet ist und zur Achse des zweiten Objektivs (O1) geneigt ist, um die Achse des ersten Objektivs in die Richtung der optischen Achse des zweiten Objektivs zu bringen, in der sich auch eine Lichtempfangs- oder Lichtsendevorrichtung (6) hinter dem halbtransparenten Spiegel befindet.

6. System nach Anspruch 3, dadurch gekennzeichnet, dass die Scheibe zur optischen Achse eines dem ersten Objektiv (O1) zugeordneten ersten Kanals geneigt ist und dass ein zweites Objektiv (O2) mit einer dazu parallelen Achse den zweiten Kanal darstellt, wobei die Achse des ersten Kanals von der Scheibe (1A) zu einer Lichtdetektor- oder Licht-Sendevorrichtung (6) abgelenkt wird, während die Achse des zweiten Kanals in Richtung auf die Detektor- oder Sendevorrichtung von einem reflektierenden Spiegel (7) reflektiert wird, der zur Scheibe parallel liegt und zur Achse des zweiten Objektivs geneigt ist, wobei jede der nicht-transparenten Zonen reflektierend gemacht ist, um die Strahlung des ersten Kanals zu reflektieren.

7. System nach Anspruch 6, dadurch gekennzeichnet, dass die Scheibe (1A) aus einem transparenten Material ist und dass jede reflektierende Zone durch eine Beschichtung (R10) auf dem entsprechenden Sektor erhalten wird.

8. System nach Anspruch 7, dadurch gekennzeichnet, dass jede nicht-transparente Zone ausserdem eine die Strahlung des zweiten Kanals absorbierende Beschichtung (R15) besitzt und dass jede transparente Zone (R2) mit einem Antireflexbelag (R20) für die Strahlung des ersten Kanals versehen ist.

9. System nach einem beliebigen der Ansprüche 3, 4, 5, 6, dadurch gekennzeichnet, dass die Scheibe aus einer ausgeschnittenen kreisförmigen Platte (R11, R12) besteht.

## Claims

1. An optical system supplied with a high speed optical channel selector, comprising at least two optical channels to be selected and a channel selector means, ensuring the operation of only one optical channel at any time and allowing to pass over from the first optical channel to the second one and vice versa by keeping stationary the optical elements constituting the respective channels, and constituted by a plane element (1) presenting at least two zones of different optical features (R1, R2) which are interposed on the respective optical trajectories, and a control means (2, 3) for controlling the displacement of the element in its plane in order to pass from one operating position to a second one by interchanging the zones and consequently the selected optical channels, characterized in that the control means is constituted by a stepping motor (2) conceived to produce a rotation increment corresponding to the passage from one zone to the next one so that the switch-over in the optical trajectories is performed during a time interval in which the element presents its maximum displacement speed, thus allowing a switch-over in the shortest possible time laps.

2. A system according to claim 1, characterized in that the plane element (1) comprises 2n zones (n being an integer $\geqslant 1$) in which successively a transparent zone (R2) is followed alternately by a non-transparent zone (R1) intended to inhibit or to reflect this radiation.

3. A system according to claim 1 or 2, characterized in that the plane element (1) is disk-shaped.

4. A system according to claim 3, characterized in that the disk only presents two zones (R1, R2) which are separated by a diameter.

5. A system according to claim 3, characterized in that it is interposed on the optical trajectory coming from lenses (O1, O2) of parallel axes, and that the plane element (1) is a disk perpendicular to these axes with a non-transparent zone and a transparent zone, that a reflecting mirror (4) which is inclined to the axis of the first lens (O2) and a semitransparent mirror (5) which is parallel to the latter and inclined on the axis of the second lens (O1) are positioned behind the disk in order to make the axis of the first lens coincide with the direction of the optical axis of the second lens, direction in which is positioned a photoreceiver or photoemitter device (6) downstream of the semitransparent mirror.

6. A system according to claim 3, characterized in that the disk is inclined on the optical axis of a first channel originating from a first lens (O1) and that a second lens (O2) having an axis parallel thereto constitutes the second channel, the axis of the first channel being reflected by the disk (1A) towards a photodetector or a photoemitter device (6), the axis of the second channel being reflected towards the detector or emitter device by a reflecting mirror (7) which is parallel to the disk and inclined to the axis of the second lens, each one of the non-transparent zones being rendered reflecting in order to reflect the radiation of the first channel.

7. A system according to claim 6, characterized in that the disk (1A) is made of a transparent material and that each reflecting zone is obtained by a layer (R10) on the corresponding sector.

8. A system according to claim 7, characterized in that each non-transparent zone further comprises an absorbing layer (R15) for absorbing the radiation of the second channel, and that each transparent region (R2) is submitted to an antireflecting treatment (R20) for the radiation of the first channel.

9. A system according to any one of claims 3, 4, 5, 6, characterized in that the disk is constituted by a cut-out circular plate (R11, R12).

FIG_1

FIG_2

FIG_3

FIG_6

## FIG_4

## FIG_5